Europäisches Patentamt

European Patent Office

Office européen des brevets

(11) Numéro de publication: **0 384 793**
**A1**

## DEMANDE DE BREVET EUROPEEN

(21) Numéro de dépôt: 90400199.7

(22) Date de dépôt: 24.01.90

(51) Int. Cl.5: **C08G 77/62, C08J 3/24, C04B 35/00, C04B 35/58**

(30) Priorité: 30.01.89 FR 8901115

(43) Date de publication de la demande:
29.08.90 Bulletin 90/35

(84) Etats contractants désignés:
AT BE CH DE ES FR GB GR IT LI LU NL SE

(71) Demandeur: **RHONE-POULENC CHIMIE**
**25, quai Paul Doumer**
**F-92408 Courbevoie Cédex(FR)**

(72) Inventeur: **Lebrun, Jean-Jacques**
**Centre Hospitalier de Lyon Chemin du Grand Revoyet**
**F-69310 Pierre Benite(FR)**
Inventeur: **Bobichon, Charles**
**1, rue de l'Angile**
**F-69005 Lyon(FR)**
Inventeur: **Caix, Olivier**
**21Ter, Avenue du Point du Jour**
**F-69005 Lyon(FR)**

(74) Mandataire: **Seugnet, Jean Louis et al**
**RHONE-POULENC CHIMIE, Service Brevets Chimie, 85, avenue des Frères Perret**
**F-69192 Saint Fons Cédex(FR)**

(54) Procédé de réticulation de polysilazanes.

(57) L'invention a trait à un procédé de réticulation de polysilazanes, caractérisé par le fait qu'il consiste à mettre en contact avec une quantité efficace d'acide triflique $CF_3SO_3H$ gazeux, des polysilazanes (i) dans lesquels les radicaux organiques liés directement aux atomes de silicium sont des radicaux hydrocarbonés saturés et/ou aromatiques et (ii) exempt d'atome d'hydrogène lié directement aux atomes de silicium.

Les polysilazanes ainsi réticulés peuvent être utilisés par pyrolyse à la préparation de produits céramiques à base de SiC et/ou $Si_3N_4$.

## PROCEDE DE RETICULATION DE POLYSILAZANES

La présente invention a trait à un procédé de réticulation de polysilazanes.

Elle concerne également, à titre d'application, l'utilisation des polysilazanes ainsi réticulés pour la préparation de matériaux céramiques à base de carbure et ou nitrure de silicium.

L'idée de préparer des produits céramiques, chargés ou non. à base de carbure et/ou nitrure de silicium par décomposition thermique de composés précurseurs du type polysilazane, notamment organopolysilazane ou organopoly(disilyl) silazane, n'est pas nouvelle et, à ce jour, de nombreux articles et brevets ont été publiés sur le sujet.

Les organopolysilazanes et les organopoly-(disilyl)silazanes dénommés par la suite polysilazanes sont des produits bien connus se présentant sous forme de monomères, d'oligomères et de polymères cycliques ou linéaires et également sous la forme de polymères résineux. Ces polysilazanes peuvent être préparés suivant une large variété de procédés à partir d'une gamme étendue de produits de départ.

L'intérêt d'une telle voie polymère réside surtout dans les possibilités de mise en forme de ce type de produits, et plus particulièrement pour l'obtention, après pyrolyse, d'articles céramiques en $Si_3N_4$, SiC, SiNC, ou leurs mélanges, sous forme de fibres ou de revêtements plus ou moins minces.

En fait, la mise en oeuvre des polysilazanes sous la forme de fibres constitue probablement un de leurs avantages principaux.

Selon un schéma désormais classique, des polysilazanes (après ramollissement éventuel s'ils sont initialement à l'état solide) sont filés en fibres continues par tout moyen connu en soi, notamment par extrusion à travers des filières, ces fibres sont ensuite traitées dans le but notamment d'améliorer leur tenue thermique et/ou mécanique, puis pyrolysées pour donner finalement les fibres en céramique désirées.

Le traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques par une voie polymères silazanes.

A ce jour, le durcissement des fibres polysilazanes fait appel soit à des méthodes physiques (irradiations) soit à des méthodes thermochimiques.

Les méthodes physiques présentent l'inconvénient majeur d'être de mise en oeuvre délicate et onéreuse, et la seule voie retenue actuellement industriellement est le durcissement thermochimique au moyen d'un traitement sous un mélange air/vapeurs d'eau.

Cependant, un tel traitement a pour inconvénient sérieux d'introduire des quantités importantes d'oxygène dans la fibre céramique, ce qui peut se traduire par une altération sensible des performances d'ensemble de ladite fibre, notamment de certaines de ses propriétés thermomécaniques comme par exemple sa résistance à la rupture.

La présente invention a donc pour but de résoudre le problème ci-dessus et de proposer un moyen de traitement chimique simple, efficace, économique et de mise en oeuvre aisée qui, en obviant aux inconvénients des procédés de l'art antérieur, permette d'aboutir sous des formes les plus diverses (fils, fibres, pellicules, revêtements, pièces massives, etc..) à des polysilazanes substantiellement infusibles qui, lors de leur pyrolyse, donnent avec de bons rendements pondéraux des produits céramiques à base de $Si_3N_4$ et ou SiC présentant d'excellentes propriétés.

On a maintenant trouvé que ce but, et d'autres, peuvent être atteints au moyen de la présente invention qui concerne en effet un procédé de réticulation de polysilazanes, et qui est caractérisé par le fait qu'il consiste à mettre en contact avec une quantité efficace d'acide triflique $CF_3SO_3H$ gazeux, des polysilazanes (i) dans lesquels les radicaux organiques liés directement aux atomes de silicium sont des radicaux hydrocarbonés saturés et/ou aromatiques et (ii) exempts d'atome d'hydrogène lié directement aux atomes de silicium.

La Demanderesse a pu constater que, de façon totalement inattendue et surprenante, un tel traitement, dont les modalités pratiques de mise en oeuvre seront définies plus en détails ci-après permet d'aboutir à des polysilazanes présentant une structure particulièrement réticulée qui leur confère de bonnes propriétés d'infusibilité et d'insolubilité.

Mais d'autres caractéristiques, aspects et avantages de l'invention apparaîtront encore plus clairement à la lecture de la description qui va suivre, et des exemples concrets, mais non limitatifs, relatifs à sa mise en oeuvre.

Les organopolysilazanes de départ susceptibles d'être réticulés selon un procédé conforme à l'invention, sont des produits bien connus en soi et aisés à préparer ; on peut utiliser notamment n'importe quel produit de réaction entre : (a) au moins un organohalogénosilane de formule (I):

$$R_aX_{4-a}Si \qquad (I)$$

dans laquelle X désigne un halogène, généralement le chlore, et les radicaux R, identiques ou différents, sont choisis parmi un radical alkyle linéaire ou ramifié éventuellement halogéné, un radical cycloalkyle, un radioal aryle tel que le radical phényle et naphtyle, un radical arylalkyle ou alkylaryle, et l'indice a étant égal à 0, 1, 2 ou 3, et (b) un composé organique ou organosilylé comportant au moins un groupement $NH_2$ ou NH comme par exemple l'ammoniac, les amines primaires ou secondaires, les silylamines, les amides, les hydrazines, les hydrazides, etc...

Dans la formule (I), comme exemples de radicaux R alkyle, ou peut citer les radicaux méthyle, éthyle, propyle, butyle, pentyle, hexyle, heptyle et octyle ; R cycloalkyle : on peut citer les radicaux cyclopentyle, cyclohexyle et cycloheptyle ; R arylalkyle : les radicaux benzyle, phénylethyle ; R alkylaryle : les radicaux tolyle et xylyle.

A titre d'exemple, comme organohalogénosilane utilisable seul ou en mélange, on peut citer : $(CH_3)_2SiCl_2$, $(CH_3)_3SiCl$, $CH_3SiCl_3$, $SiCl_4$ $(CH_3)_2Si(CH_2Cl)_2$, $(CH_3)_3SiCH_2Cl$, $CH_3Si(CH_2Cl)_3$ $(C_6H_5)_2SiCl_2$, $(C_6H_5)(CH_3)SiCl_2$, $C_6H_5SiCl_3$ $(CH_3)(CH_3CH_2)SiCl_2$.

Comme exemple de composés comportant au moins un groupement $NH_2$ ou NH et utilisables pour la synthèse des organopolysilazanes ci-dessus, on peut citer : l'ammoniac, la méthylamine, la diméthylamine, l'éthylamine, la cyclopropylamine, l'hydrazine, la méthylhydrazine, l'éthylènediamine, la tétraméthylènediamine, l'hexaméthylènediamine, l'aniline, la méthylaniline, la diphénylamine, la toluidine, la guanidine, l'aminoguanidine, l'urée, l'hexaméthyldisilazane, le diphényltétraméthyldisilazane, le tétraphényldiméthyldisilazane, le tétraméthyldivinyldisilazane, le diméthyldiphényldivinyldisilazane et le tétraméthyldisilazane.

Les organopolysilazanes obtenus en fin de réaction englobent plus spécifiquement :

1 - les polymères linéaires répondant aux formules :

$$H_2N(R_2SiNH)_p SiR_2 NH_2 \quad (II)$$

et

$$R_3SiNH(R_2SiNH)_{p'} SiR_3 \quad (III)$$

dans lesquelles R a la signification donnée pour la formule (I) ; p et p' sont des nombres entiers pouvant être compris entre 1 et 1000 généralement entre 3 et 300.

Les polymères de formule (II) peuvent être préparés par mise en contact de diorganodichlorosilanes avec de l'ammoniac, et ceux de formule (III) par réaction d'ammoniac sur un triorganochlorosilane ou un mélange de diorganodichlorosilane et de triorganochlorosilane (voir brevet français FR - A. 1.086.932, brevet américain US - A 2.564.674).

De façon générale, la réaction d'organohalogénosilane sur une organoamine est décrite dans les brevets américains US-A 3.853.567 et 3.892.583 et la réaction d'organohalogénosilane sur un disilazane est décrite dans le brevet belge BE-A 888.787.

2 - les polymères cycliques répondant à la formule :

$$(R_2SiNH)_n \quad (IV)$$

dans laquelle n est compris entre 3 et 10, généralement n = 3,4 et R a la signification donnée pour la formule (I) ci-dessus. Ils sont décrits notamment dans le brevet britannique GB-A.881.178.

3 - les polymères résineux formés de motifs choisis parmi ceux de formule $R_3SiNH_{0,5}$, $R_2SiNH$, $RSiNH_{1,5}$, $Si(NH)_2$.

Ils sont avantageusement préparés par mise en contact des organochlorosilanes correspondant ou des mélanges de ces silanes, avec de l'ammoniac, de préférence en milieu solvant organique (voir brevets français FR-A 1.379.243, FR-A 1.392.853 et FR-A 1.393.728).

Les organopoly(disilyl)silazanes de départ susceptibles d'être réticulés selon un procédé conforme à l'invention, sont également des produits bien connus en soi et aisés à préparer. Ils peuvent être notamment préparés par action : (a) d'un composé organique ou organosilylé comportant au moins un groupement $NH_2$ ou NH comme par exemple l'ammoniac, les amines primaires ou secondaires, les silylamines, les amides, les hydrazines et les hydrazides, etc..., sur (b) au moins un organohalogénodisilane de formule :

$$R_bX_{3-b}Si Si R_cX_{3-c} \quad (V)$$

dans laquelle les radicaux R identiques ou différents ont la même signification que ci-dessus et b est égal à 0, 1, 2 ou 3 et c est égal à 0, 1 ou 2, et X est un halogène, généralement le chlore.

Comme exemple de composés de formule (V) on peut citer : $(CH_3)_2 ClSiSi (CH_3)_2 Cl$, $(CH_3)_2Cl SiSi CH_3 Cl_2$ $CH_3 Cl_2 SiSi CH_3 Cl_2$

Comme exemples de composés comportant au moins un groupement $NH_2$ et NH utilisables pour la synthèse des poly(disilyl)silazanes, on peut citer les mêmes composés que ceux cités ci-dessus pour l'aminolyse des organohalogénomonosilanes.

De manière générale, la réaction d'halogénodisilane, en présence éventuellement d'halogenosilane, sur l'ammoniac est décrite dans le brevet européen EP-A 75826. La réaction d'halogénodisilane sur un disilazane est décrite dans le brevet français FR-A 2.497.812.

Enfin, comme décrit dans le brevet EP-A 75826, il est possible de préparer des organopoly(disilyl) silazanes-silazanes par réaction de dérivés aminés cités précédemment sur des mélanges de produits halogénés de formule (I) et (V) ci-dessus.

Les polysilazanes de départ préparés à partir d'ammoniac sont généralement appelés ammonolysats et les polysilazanes de départ préparés à partir d'un composé aminé comme indiqué ci-dessus sont appelés aminolysats qui incluent donc les ammonolysats.

Bien entendu, il est également possible d'utiliser à titre de polysilazanes de départ des polysilazanes qui, issus des réactions d'aminolyse décrites ci-dessus, ont subi en outre des traitements catalytiques bien connus destinés à provoquer, suivant la nature de l'aminolysat, une polymérisation et/ou une copolymérisation et·ou un réarrangement des molécules, et ceci dans le but d'augmenter encore leur poids moléculaire, mais tout en gardant aux polysilazanes obtenus leur caractère fusible et soluble dans les solvants organiques.

Les conditions de mise en oeuvre de tels traitements catalytiques sont décrites notamment dans les documents suivants, tous cités à titre de références non limitatives : JP-A-77 160446, US-A-3.007.886, US-A-3.187.030 et FR-A-2.577.933.

Il est également possible d'utiliser à titre de polysilazanes de départ des copolymères silanes-silazanes obtenus par polycondensation, en milieu solvant et en présence d'un métal alcalin, notamment le sodium, entre des silanes chlorés et des disilazanes chlorés, comme décrit dans la demande de brevet français déposée sous le n° 87 08091, ou bien encore des polycarbosilazanes obtenus par thermolyse, de préférence opérée sous atmosphère inerte et à une température comprise entre 250°C et 550°C, des copolymères ci-dessus.

De préférence, on opèrera sur des polysilazanes de départ présentant par molécule au moins un groupement ≡ Si-NH-.

De préférence encore, on opèrera sur des polysilazanes de départ qui auront été préalablement préhydrolysés, car on a pu constater que dans ce cas, et de façon inattendue, une réticulation encore plus efficace lors de la mise en contact avec l'acide triflique vapeur pouvait être obtenue. Dans la pratique, la préhydrolyse est conduite de manière telle que la teneur en oxygène dans le polysilazane à réticuler soit alors comprise entre 1 et 3 % en poids. Elle peut être effectuée notamment par mise en contact du polysilazane avec une atmosphère de vapeurs d'eau, et/ou de l'eau liquide.

Bien entendu, préalablement au traitement de réticulation selon l'invention développé plus en détails ci-après, les polysilazanes peuvent avoir subi des opérations de mise en forme permettant d'aboutir aux configurations les plus diverses, telles que filaments, fibres, articles moulés, revêtements de support, et autres. Le traitement selon l'invention est ainsi avantageusement applicable à la réticulation des fibres de polysilazanes qui, une fois traitées, sont destinées par pyrolyse à engendrer des fibres céramiques à base de carbure et/ou nitrure de silicium.

Il va aussi bien entendu de soi que les polysilazanes de départ destinés à être réticulés peuvent par ailleurs contenir des charges, de préférence choisies parmi $SiO_2$, $Si_3N_4$, SiC, BN, $B_2O_3$, $B_4C$, AlN, $Al_2O_3$, $Al_4C_3$, TiN, $TiO_2$, $ZrO_2$, ZrC, $VO_2$,

etc...En outre, si besoin est pour une application donnée, leur viscosité peut être ajustée classiquement par ajout d'un solvant organique compatible avec le polysilazane considéré, comme par exemple du benzène, du toluène, de l'hexane, du cyclohexane, de l'éther isopropylique, de l'éther éthylique, du dichlorométhane ou du chlorobenzène.

Conformément à l'invention, et après donc mise en forme éventuelle, les polysilazanes définis ci-dessus sont alors traités au moyen de vapeurs d'acide triflique.

Par quantité efficace d'acide triflique gazeux, on entend une quantité suffisante pour réticuler convenablement le polysilazane et lui assurer ainsi un caractère substantiellement infusible et insoluble dans la plupart des solvants organiques usuels (pentane, hexane, toluène, benzène...).

Dans la pratique, des quantités d'acide comprises entre 10 et 10000 ppm, et plus particulièrement entre 1000 et 10000 ppm, par rapport au polysilazane de départ, peuvent être utilisées.

La température à laquelle est menée le traitement, et la durée de ce dernier, peuvent varier dans une large mesure et dépendent de la nature du polysilazane à durcir, ainsi que de la quantité d'acide triflique mise en jeu. D'une manière générale, la durée est liée à la température du traitement : plus cette température est élevée et plus la durée du traitement peut être raccourcie, l'important étant d'aboutir dans tous les cas en fin de traitement à un état substantiellement infusible et insoluble.

D'une manière pratique, cette température est généralement comprise entre l'ambiante et la température de ramollissement du polysilazane à durcir ; elle est de préférence comprise entre 70°C et une température légèrement inférieure à celle correspondant au point de ramollissement du polysilazane à durcir, généralement 120°C.

La durée du traitement n'étant pas critique, elle peut varier de quelques minutes à plusieurs heures, selon les températures mises en jeu.

La mise en contact polysilazane / acide triflique gazeux peut se faire selon tout moyen connu en soi.

L'acide triflique gazeux peut être utilisé pur, ou bien encore dilué dans un gaz inerte, tel qu'un gaz d'argon (ou tout autre ·gaz rare) ou d'azote par exemple.

On opère généralement à pression atmosphérique, bien que des pressions inférieures ou supérieures ne soient bien évidemment pas exclues. En outre, la mise en contact entre le polysilazane et l'acide triflique gazeux peut être statique ou dynamique, c'est à dire réalisée sous balayage ; elle est de préférence réalisée sous balayage, car cela permet d'éliminer de façon continue l'ammoniac qui se dégage lors de la réticulation.

A l'issue du traitement de réticulation selon l'invention, on récupère un polysilazane, éventuellement mis en forme, infusible et insoluble dans la plupart des solvants organiques usuels, notamment dans l'hexane.

Les polysilazanes ainsi durcis peuvent alors subir, de manière classique et connue, des traitements thermiques (pyrolyses) destinés à les transformer en des céramiques à base de SiC, $Si_3N_4$ ou leurs mélanges.

Plus particulièrement, les supports recouverts ou imprégnés du polysilazane durci, ou les fibres en polysilazane durci, peuvent subir immédiatement ou ultérieurement une pyrolyse menée sous vide ou sous pression ou sous atmosphère inerte ou réactive (par exemple $HN_3$) jusqu'à obtenir une céramisation totale.

Des exemples concrets, mais non limitatifs, illustrant l'invention dans ses divers aspects, vont maintenant être donnés.

EXEMPLE 1

Un polysilazane de départ est tout d'abord préparé de la manière suivante :
dans un réacteur de trois litres double enveloppe muni d'une agitation mécanique, d'un tube d'entrée des gaz et d'un condenseur, on effectue une coammonolyse, en présence de 1,1 litre d'éther isopropylique, d'un mélange de $CH_3SiCl_3$ (0,85 mole) et de $(CH_3)_2SiCl_2$ (0,59 mole). Ce mélange dans l'éther isopropylique est refroidi à 3°C et est maintenu à cette température pendant l'introduction de $NH_3$ gazeux. Le débit d'introduction de $NH_3$ est d'environ 6 ml/s et l'addition a lieu en 6 heures. En fin d'essai, on filtre le chlorure d'ammonium formé sur verre fritté (diamètre moyen des pores : 10 μm) et on récupère une solution limpide de polysilazane. Cette solution est ensuite concentrée puis traitée avec de l'acide triflique selon des modalités pratiques définies dans la demande de brevet français 2 577 933.

Le polysilazane en solution est ensuite préhydrolysé par ajout d'une quantité d'eau telle que la teneur en oxygène dans ledit polysilazane soit amenée à 2,2 % en poids.

Cette solution est ensuite évaporée (élimination du solvant) et le polysilazane ainsi récupéré est ensuite filé par extrusion sous forme de fibres (diamètre moyen : 13 μ) ; la température de ramollissement Tr du polysilazane est alors de 115°C.

Ces fibres sont alors traitées à 80°C par un courant d'argon chargé en acide triflique gazeux, la quantité totale d'acide triflique mise en jeu durant ce traitement étant fixée à 5000 ppm par rapport à la masse de polysilazane traitée.

Les fibres ainsi traitées sont ensuite portées pendant 16 heures à 100°C.

On obtient alors un produit infusible (Tr ≥ 260°C) et insoluble, notamment dans l'hexane. La teneur en oxygène dosée sur la fibre réticulée est de 3 % en poids.

EXEMPLE 2

Des fibres polysilazanes sont préparées comme dans l'exemple 1, mais cette fois à partir d'un polysilazane obtenu par coammonolyse d'un mélange de 1,06 mole de $CH_3SiCl_3$ et de 0,36 mole de $(CH_3)_2SiCl_2$ ; la température de ramollissement du polysilazane est alors de 130°C.

Ces fibres sont ensuite traitées à 80°C par un courant d'argon chargé en acide triflique gazeux, la quantité totale d'acide triflique mise en jeu durant ce traitement étant fixée à 5000 ppm par rapport à la masse de polysilazane traitée.

A l'issue de ce traitement, on récupère un produit infusible (Tr ≥ 260°C)) et insoluble, notamment dans l'hexane.

La teneur en oxygène dosée sur la fibre réticulée est de 2,3 % en poids.

Exemple 3

Les fibres de polysilazanes obtenues selon l'exemple 2 sont cette fois traitées à 100°C par un courant d'argon chargé en acide triflique gazeux, la quantité d'acide triflique mise en jeu étant toujours fixée à 5000 ppm.

A l'issue de ce traitement, on récupère un produit infusible (Tr ≥ 260°C) et insoluble, notamment dans l'hexane.

La teneur en oxygène dosée sur la fibre réticulée est de 2 % en poids.

**Revendications**

1/ Procédé de réticulation d'un polysilazane, caractérisé par le fait qu'il consiste à mettre en contact avec une quantité efficace d'acide triflique $CF_3SO_3H$ gazeux, un polysilazane (i) dans lequel les radicaux organiques liés directement aux atomes de silicium sont des radicaux hydrocarbonés saturés et/ou aromatiques et (ii) exempt d'atome d'hydrogène lié directement aux atomes de silicium.

2/ Procédé selon la revendication 1, caractérisé en ce que ledit polysilazane comporte par molécule au moins un groupement $\equiv$ Si-NH-.

3/ Procédé selon l'une quelconque des revendications précédentes caractérisé en ce que ledit polysilazane, avant ladite mise en contact, a été préalablement hydrolysé.

4/ Procédé selon la revendication 3 caractérisé en ce que la teneur en oxygène dans ledit polysilazane hydrolysé est comprise entre 1 et 3 % en poids.

5/ Procédé selon l'une quelconque des revendications précédentes caractérisé en ce que ladite mise en contact se fait à une température comprise entre la température ambiante et la température de ramollissement du polysilazane.

6/ Procédé selon la revendication 5 caractérisé en ce que ladite température est comprise entre 70°C et une température légèrement inférieure à la température de ramollissement du polysilazane.

7/ Procédé selon l'une quelconque des revendications précédentes caractérisé en ce que, avant ladite mise en contact, l'on met ledit polysilazane à une forme d'article désirée.

8/ Procédé selon la revendication 7 caractérisé en ce que ladite forme est une fibre.

9/ Procédé de préparation d'un produit céramique à base de SiC et/ou $Si_3N_4$ caractérisé par le fait qu'il consiste à pyrolyser un polysilazane réticulé selon un procédé conforme à l'une quelconque des revendications 1 à 8.

Office européen des brevets

# RAPPORT DE RECHERCHE EUROPEENNE

Numero de la demande

EP 90 40 0199

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 197 863 (RHONE-POULENC)<br>* Revndications 1-9; page 7, paragraphes 4,5 * | 1,2,5,6,9 | C 08 G 77/62<br>C 08 J 3/24<br>C 04 B 35/00<br>C 04 B 35/58 |
| Y | FR-A-2 190 764 (BAYER)<br>* Revendications 1,2,3,4,5; page 6, lignes 5-25 * | 1,2,5,6,9 | |
| Y | US-A-4 693 914 (P. FOLEY)<br>* Revendications 1,2,3,4 * | 1 | |
| A | EP-A-0 208 630 (RHONE-POULENC)<br>* Revendications 1-8; page 4, lignes 4-21 * | 1 | |
| A | EP-A-0 235 485 (RHONE-POULENC)<br>* Revendications 1,2,7; page 5, lignes 49-50 * | 1 | |

DOMAINES TECHNIQUES RECHERCHES (Int. Cl.5)

C 08 G
C 08 L
C 08 J
C 04 B

Le présent rapport a été établi pour toutes les revendications

| Lieu de la recherche | Date d'achèvement de la recherche | Examinateur |
|---|---|---|
| LA HAYE | 07-06-1990 | DEPIJPER R.D.C. |